Europäisches Patentamt

European Patent Office

Office européen des brevets

(11) Publication number: **0 189 968**
**A2**

# EUROPEAN PATENT APPLICATION

(21) Application number: **86300051.9**

(22) Date of filing: **07.01.86**

(51) Int. Cl.⁴: **G01V 1/38**

(30) Priority: **28.01.85 US 695606**

(43) Date of publication of application:
**06.08.86 Bulletin 86/32**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Ritter, Sammie Frank**
**6616 Cardinal Lane, Rt. 3**
**Roanoke Texas 76262(US)**

(74) Representative: **West, Alan Harry**
**Mobil Court 3 Clements Inn**
**London WC2A 2EB(GB)**

(54) Method and apparatus for locating severed seismic streamers.

(57) Apparatus and method are disclosed for locating a portion of or an entire streamer which has been accidentally severed from the towing vessel wherein identifying means is activated on command which either visually, or electronically or both gives an indication of the location of the severed streamer segment.

EP 0 189 968 A2

## METHOD AND APPARATUS FOR LOCATING SEVERED SEISMIC STREAMERS

In present marine seismic exploration, one or several lines of acoustic sources are towed behind a seismic exploration vessel. A line or several lines of acoustic pulse detectors, such as hydrophones, are towed behind the acoustic sources. The line or lines of acoustic pulse detectors may extend for several miles and is normally kept at zero buoyancy. This buoyancy provides the lowest ambient background noise from the detectors, but also prevents easy visibility. As a result, the line of acoustic pulse detectors, traveling a few feet below the surface of the water, are sometimes severed by other marine vessels. The line of acoustic pulse detectors may also be severed by contact with a reef, rough seas, etc.

When the line of detectors is severed, part of the severed streamer is damaged to the extent that its zero buoyancy is destroyed and becomes a negative buoyancy. If this occurs, the severed seismic streamer will sink to the bottom. Since the value of a typical streamer may exceed five hundred thousand dollars ($500,000), recovery of the severed streamer is economically important.

The conventional method for preventing the loss of a severed portion of the streamer is to use a floating tailbuoy connected by rope to the tailend of the streamer. The tailbuoy may be of a "Zodiac"-type rubber boat or some-thing similar and may be equipped with a flashing light, radar reflector, or possibly a radar transponder. However, when the streamer is severed, past history indicates that the tailbuoy is usually damaged and lost also. Thus, the conventional method for locating a severed streamer usually fails.

The present invention provides an apparatus for locating a severed portion of a seismic streamer towed by a marine vessel comprising:

interrogation means on the marine vessel for generating an identifiable signal when the seismic streamer is severed;

receiver means connected at spaced apart locations on the seismic streamer for receiving the identifiable signal; and

response means connected to the receiver means for providing response whenever the receiver means receives the identifiable signal.

The present invention further provides a method for locating a severed portion of a seismic streamer towed by a marine vessel comprising:

providing an identifying device on the seismic streamer, the identifying device having a means for receiving an identifiable signal and a response means connected to the receiver means for providing a response whenever the receiver means receives an identifiable signal;

providing on the marine vessel an interrogation means for generating an identifiable signal;

issuing an identifiable signal by the interrogation means;

receiving the identifiable signal by the receiver means; and

providing a response to the identifiable signal.

The present invention pertains to locating and retrieving accidentally severed acoustic pulse streamers. The present invention includes spaced-apart means for locating a portion of a severed streamer which may be activated upon command when retrieval of the severed streamer is to be commenced. In one embodiment, a sonar transducer is activated by command emitting sonar pulses or waves that may be detected on the vessel to locate the severed streamer. In one alternate embodiment, a sonar transponder is activated, making it responsive to interrogation from the vessel. The interrogation may cause a portion of the severed streamer to reply to the vessel with pulses or wavetrains. As another alternative, the interrogation commands may cause a gas cylinder to be discharged into an inflatable bag, bringing the severed streamer to the surface. Also, interrogation commands may be used to cause the gas cylinder to inflate a very small bag attached to the severed streamer indicating the severed streamer's location.

FIGURE 1 is a plan view of a marine seismic data acquisition system.

FIGURE 2 is a plan view of a submerged, severed seismic streamer having an identification buoy activated.

FIGURE 3 is a plan view of a submerged, severed seismic streamer having a retrievable buoy attached thereto.

FIGURE 4 is a plan view of a submerged, severed seismic streamer having a sonar transducer activated.

The present invention provides a method and apparatus for locating a seismic streamer once it has been severed from its towline connected to a marine vessel.

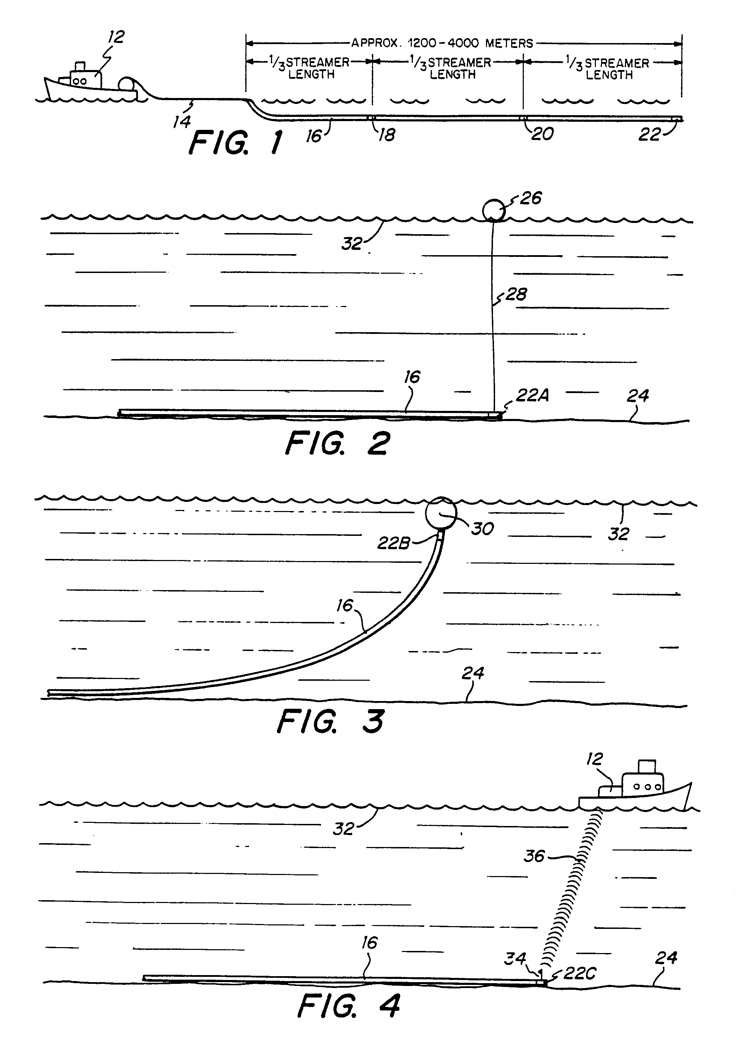

FIGURE 1 illustrates a marine vessel 12 having a towline 14 connected to a seismic streamer 16. The line of acoustic pulse generators (not shown) which are normally towed behind marine vessel 12 immediately preceding seismic streamer 16 is not illustrated in FIGURE 1 for simplicity. Illustrated on seismic streamer 16 are recovery devices 18, 20 and 22. The recovery devices are located at approximately every one-third of the streamer length to provide backup units in the event of damage to any one unit. Located on marine vessel 12 is an interrogation means or any electronic means currently in use in the art to send radio signals to a remote location to enlist a response from a remote device. Identification devices 18, 20 and 22 may be identical devices or may be a combination of any of the following described devices. Essentially, each of the identifying devices 18, 20 and 22 contains a receiver means for receiving an identifiable signal which is transmitted from marine vessel 12 by an interrogation means (not shown) located thereon and a response means connected to the receiver means for providing a response whenever the receiver means receives an identifiable signal from the marine vessel. The receiver means may be of any type currently in use in the art which receives a radio frequency signal and generates a much stronger signal in response thereto. The response means of identifying devices 18, 20 and 22 may take one of several forms. Response means may be a compressed gas source connected to the receiver means for releasing a predetermined quantity of compressed gas whenever the identifiable signal is received for marine vessel 12. A flotation means may be connected to the compressed gas source (not shown) for receiving the predetermined quantity of compressed gas.

Referring now to FIGURE 2, seismic streamer is illustrated as having been severed from line 14 and resting on floor 24 of the ocean. In FIGURE 2, the flotation means is illustrated as being a small marker buoy 26, which has received the predetermined amount of compressed gas and has ascended to the surface, remaining attached to identifying device 22A through cord 28, such as nylon cord.

Referring now to FIGURE 3, the flotation means associated with the compressed gas source for receiving the predetermined amount of compressed gas is illustrated as a large buoy 30 for bringing seismic streamer 16 from floor 24 of the ocean. Although a single buoy 30 is illustrated as connected to identifying device 22B, several buoys similar to buoy 30 may be placed at spaced-apart locations along seismic streamer 16 to assure returning streamer 16 to surface 32.

Referring now to FIGURE 4, identifying device 22C is illustrated as containing a sonar transponder 34 which has been activated by the interrogation means (not shown) on marine vessel 12. Sonar transponder 34 may be used to emit sonar pulses or wavetrains 36 that are detected on marine vessel 12 by sonar tranducer detectors (not shown). Sonar transducer 34 and sonar transducer detectors located on marine vessel 12 may be of any type currently in use in the art. The preferred embodiment will operate with any of the many types currently in use, the only requirement being size restriction dictated by seismic streamer 16.

## Claims

1. An apparatus for locating a severed portion of a seismic streamer towed by a marine vessel comprising:

interrogation means on the marine vessel for generating an identifiable signal when the seismic streamer is severed;

receiver means attached at spaced apart locations on the seismic streamer for receiving the identifiable signal; and

response means connected to the receiver means for providing a response whenever the receiver means receives the identifiable signal.

2. The apparatus of claim 1 wherein the response means includes:

compressed gas source attached to the receiver means for releasing a predetermined quantity of compressed gas; and

flotation means associated with the compressed gas source for receiving the compressed gas.

3. The apparatus of claim 2 wherein the flotation means is attached to a cord which is attached to the streamer to identify the location of the streamer.

4. The apparatus of claim 2 wherein the flotation means is attached to the streamer for bringing the streamer to the marine surface.

5. The apparatus according to claim 1 wherein the response means includes a sonar transducer to emit sonar pulses or wavetrains and the marine vessel includes a sonar transducer detector for receiving the emitted sonar pulses or wavetrains.

6. A method for locating a severed portion of a seismic streamer towed by a marine vessel comprising the steps of:

providing an identifying device on the seismic streamer, the identifying device having a means for receiving an identifiable signal and a response means connected to the receiver means for providing a response whenever the receiver means receives an identifiable signal;

providing a means for interrogation on the marine vessel for generating an identifiable signal;

issuing an identifiable signal by the interrogation means;

receiving the identifiable signal by the receiver means; and

providing a response to the identifiable signal.

7. The method according to claim 6 wherein the providing a response step includes the steps of:

releasing a predetermined quantity of compressed gas from a compressed gas source; and

inflating a flotation means associated with the compressed gas source to identify the location of an end of the seismic streamer.

8. The apparatus according to claim 6 wherein the providing a response step includes the steps of:

releasing a predetermined quantity of compressed gas from a compressed gas source; and

inflating a flotation means for bringing the seismic streamer to the surface.

9. The method according to claim 6 wherein the providing a response step includes the steps of:

emitting sonar pulses from a sonar transducer located on the seismic streamer; and

receiving the sonar pulses by a sonar transducer detector located on the marine vessel.

0 189 968

FIG. 1

FIG. 2

FIG. 3

FIG. 4